# EUROPEAN PATENT SPECIFICATION

(11) **EP 3 895 910 B1**
(45) Date of publication and mention of the grant of the patent: **29.03.2023**
(21) Application number: 21169015.1
(22) Date of filing: 16.04.2021
(51) Int. Cl.: B60C 9/00, B60C 9/20, B60C 9/22, B60C 9/26

(54) **TIRE WITH CUT PROTECTOR BELT STRUCTURE**
REIFEN MIT SCHNITTSCHUTZBANDSTRUKTUR
PNEU DOTÉ D'UNE STRUCTURE DE PROTECTION DE L'ARMATURE DE SOMMET CONTRE LES COUPES

(30) Priority: 17.04.2020 US 202063011358 P; 12.10.2020 US 202017067825
(43) Date of publication of application: 20.10.2021
(73) Proprietor: The Goodyear Tire & Rubber Company, Akron, OH 44316 (US)
(72) Inventor: REITER, Leonard James, Ravenna, 44266 (US); BOEHLEFELD, Robert John, Brecksville, 44141 (US); CELIK, Ceyhan, Stow, 44224 (US); GILLICK, James Gregory, Akron, 44313 (US); ONDO, Andrew Robert, Pulaski, 16143 (US); WAGNER, David Charles, Wadsworth, 44281 (US); RICHARDS, Jimmy Lee, Rootstown, 44272 (US); SELF, Christopher Ryan, Akron, 44305 (US); SCHELLENBERGER, II, Michael William, Fairlawn, 44333 (US); UEYOKO, Kiyoshi, Copley, 44321 (US)
(74) Representative: Kutsch, Bernd

(56) References cited:
- EP-A1- 0 733 496
- EP-A1- 1 477 333
- EP-A2- 0 396 494
- WO-A1-2017/153654
- JP-A- H0 438 205
- US-A- 4 934 428
- US-A- 5 082 713
- US-A1- 2017 057 291

## Description

### Field of the Invention

The invention relates generally to tires and more particularly to heavy duty tires, such as truck, bus or aircraft tires.

### Background of the Invention

Aircraft, truck or bus tires are typically retreaded in order to reuse the large and complex tire carcass multiple times. However, the treads of truck, bus or aircraft tires may be subject to frequent punctures from stones or other sharp objects in the road or runway surface. The frequency and severity of punctures may cause the tire carcass to be scrapped. Cut protector belts are typically used to try and prevent the carcass from being damaged. However, cut protector belts are often not stiff enough to prevent the damage to the carcass. The sharp object tends to move the belt out of the way in order to pierce the carcass. Thus, an improved cut protector belt is desired, which can be used on new or retreaded tires to improve the service life of the tire carcass.

EP 0 396 494 A2 describes a tire in accordance with the preamble of claim 1.

Other tires using non-round nylon monofilament cords or bands in a belt layer are known from US 5,082,713, WO 2017/153654 A1, JP-H04-38205 A and EP 0 733 496 A1.

US 2017/057291 A1 shows a tire having a belt package having a layer with helically wound nylon cords and a layer with a zigzag structure with nylon cords.

EP 1477333 A1 and US 4934428 A disclose tires comprising a belt structure, a protective belt and a cushion rubber layer between the belt structure and the protective belt.

### Summary of the Invention

The invention relates to a tire in accordance with claim 1.

Dependent claims refer to preferred embodiments of the invention.

The invention provides in a first aspect a tire having a cut protector belt located radially outward of a main belt structure, wherein the cut protector belt is a zigzag belt structure formed by winding a monofilament cord from a first lateral edge to a second lateral edge in a zigzag manner to form an integrally formed two layer of cords, wherein the cross-sectional shape of the monofilament cord is not round. Preferably, the monofilament cord is obround.

### Definitions

"Aspect ratio" of the cord means the ratio of its height (H) to its width (W) multiplied by 100 percent for expression as a percentage.

"Axial" and "axially" means lines or directions that are parallel to the axis of rotation of the tire.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Lateral" means an axial direction.

"Lateral edges" means a line tangent to the axially outermost tread contact patch or footprint as measured under normal load and tire inflation, the lines being parallel to the equatorial centerplane.

"Monofilament" means a cord having only one filament.

"Obround" means a cross-sectional shape having two opposed semicircles connected by parallel lines tangent to their endpoints.

"Radial" and "radially" means directions radially toward or away from the axis of rotation of the tire.

"Zigzag belt reinforcing structure" means a belt structure formed of at least two layers of cords interwoven together wherein a ribbon of parallel cords preferably having 1 to 20 cords in each ribbon are laid up in an alternating pattern extending at an angle preferably between 5° and 45° between lateral edges of the belt, and more preferably between 3 and 11 degrees, and most preferably between 5 and 11 degrees.

### Brief Description of the Drawings

The invention will be described by way of example and with reference to the accompanying drawings in which:
FIG. 1 illustrates a cross-sectional view of one half of a tire of the present invention;

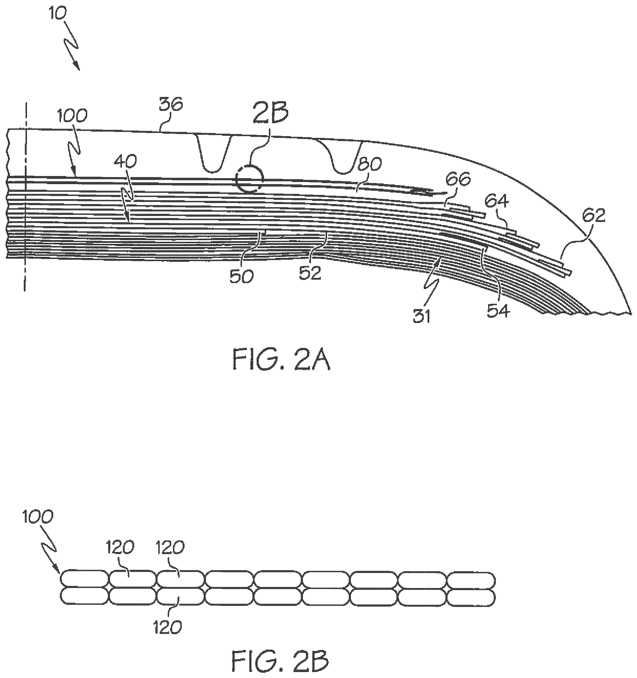

FIG. 2A is a close-up perspective view of the upper portion of FIG. 1 showing the cut protector belt and belt package of the present invention, while FIG. 2B illustrates a closeup view of the cut protector belt monofilaments;
FIG. 3A illustrates a tire drum wherein a zigzag belt structure is being formed from winding a strip at each lateral ends of the drum;
FIG. 3B illustrates a cross-sectional view of a reinforced strip with parallel reinforcements;
FIG. 4 illustrates the zigzag belt structure during formation;
FIG. 5 illustrates an obround cross-section of a monofilament of the present invention;
FIG. 6 illustrates an oval cross-section of a monofilament of the present invention; and
FIG. 7 illustrates a rectangular cross-section with rounded corners of a monofilament of the present invention.

### Detailed Description of Example Embodiments of the Present Invention

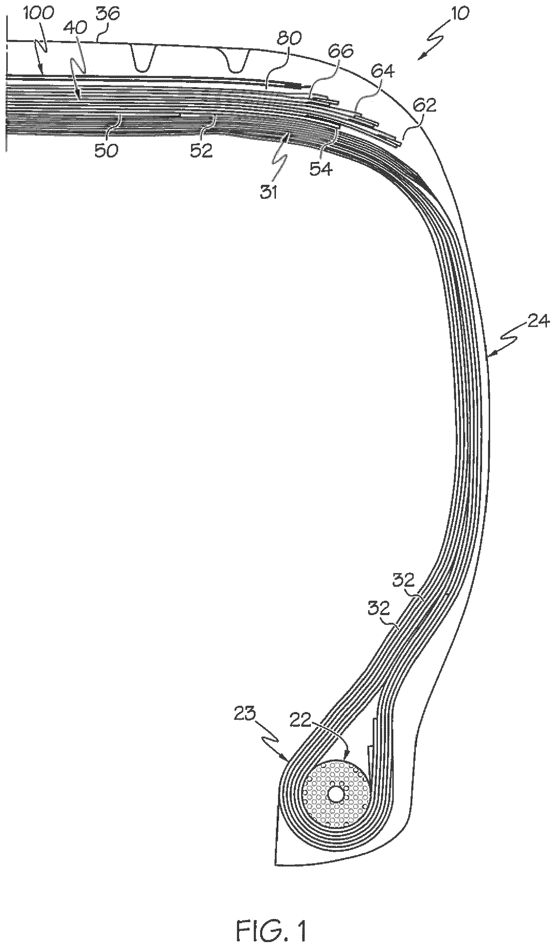

FIG. 1 illustrates a cross-sectional view of a first embodiment of a tire 10 of the present invention. The radial tire in this example is an aircraft tire, which includes a pair of bead portions 23 each containing a bead core 22 embedded therein, a sidewall portion 24 extending substantially outward from each of the bead portions 23 in the radial direction of the tire, and a tread portion 36 of substantially cylindrical shape extending between radially outer ends of these sidewall portions 24. Furthermore, the tire 10 is reinforced with a carcass 31 toroidally extending from one of the bead portions 23 to the other bead portion 23. The carcass 31 preferably comprises at least two carcass plies 32, e.g., six carcass plies 32 in the illustrated embodiment. Among these carcass plies 32, four inner plies are wound around the bead core 22 from inside of the tire toward outside thereof to form turnup portions, while two outer plies are extended downward to the bead core 22 along the outside of the turnup portion of the inner carcass ply 32. Each of these carcass plies 32 preferably contains many nylon cords such as nylon-6,6 cords extending substantially perpendicular to an equatorial plane E of the tire (i.e. extending in the radial direction of the tire).

A belt package 40 is arranged between the carcass 31 and the tread rubber 36 and comprises one or more belt plies 50, 52, 54, such as three belt plies. Preferably, the one or more belt plies 50, 52, 54 are the radially innermost belt plies of the tire 10 and are located near the carcass 31.

Preferably, the one or more belt plies 50, 52, 54 are relatively low angle belts, preferably with a belt angle of 10 degrees or less, more preferably with a belt angle of 5 degrees or less. The relatively low angle belts 50, 52, 54 may be formed of belt ply with parallel cords at a desired angle, i.e., belts with cut ends, or may be formed by helically winding a strip of one or more cords about the tire building drum to form a continuous belt with no cut ends. Preferably, the one or more relatively low angle belts 50, 52, 54 increase in width from the radially innermost belt 50 to the radially outermost belt 54.

The belt package 40 preferably further includes one or more zigzag belt structures 62, 64, 66 located radially outward of the one or more relatively low angle belts 50, 52, 54.

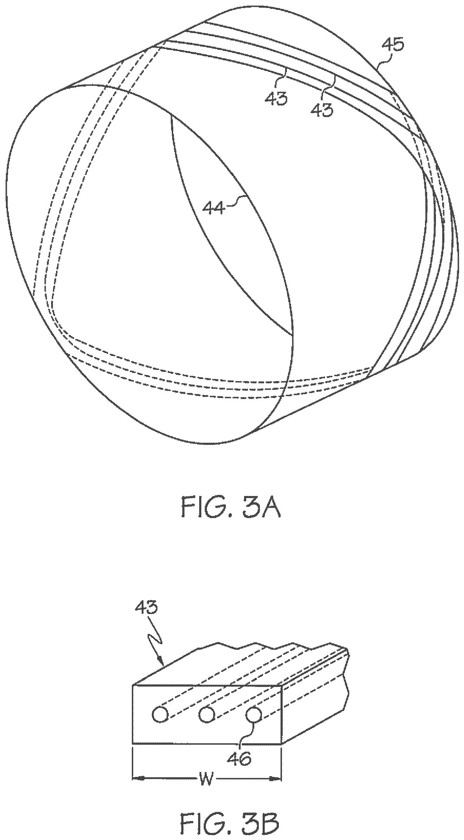

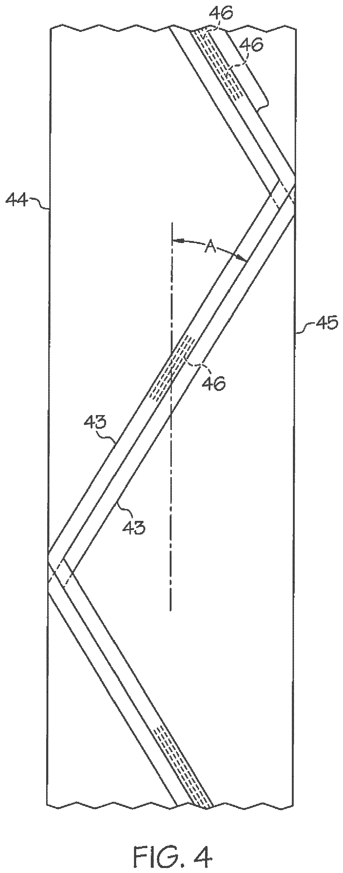

As shown in FIGS. 3 and 4, each of the radially outer zigzag belt structures 62, 64, 66 is formed by winding a rubberized strip 43 of one or more parallel reinforcement cords 46 generally in the circumferential direction while being inclined to extend between side ends or lateral edges 44 and 45 of the layer forming a zigzag path and conducting such a winding many times while the strip 43 is shifted at approximately a width of the strip in the circumferential direction so as not to form a gap between the adjoining strips 43. As a result, the cords 46 of each strip 43 extend substantially zigzag in the circumferential direction while changing the bending direction at a turnaround point at both ends 44, 45 and are substantially uniformly embedded in the first inner zigzag belt structure 62 over a full region of the first inner zigzag belt structure. The cords 46 of the zigzag belt structures cross with each other at a cord angle A of preferably 5 degrees to 40 degrees with respect to the equatorial plane of the tire when the strip 43 is reciprocated at least once between both side ends 44 and 45 of the ply within every 360 degrees of the circumference as mentioned above.

The strip of reinforcement cords 43 preferably has a width W, W being in the range of 5 mm to 38 mm (0.2 to 1.5 inches). It is believed preferable that the strip width W should be 25.4 mm (1 inch) or less to facilitate bending to form the zigzag paths of the inner and outer layers.

The radially outermost zigzag belt structure 66 is preferably the narrowest belt of all said radially outer zigzag belt structures 62, 64, 66. Preferably, the axial width of the radially outer zigzag belt structures 62, 64, 66 is staggered and increases from the radially outermost zigzag belt structure 66 to the radially innermost zigzag belt structure 62. Preferably, the belt edges of the zigzag belt structure 66 at least partially extend over the axial sides of the zigzag belt structures 64 and 62.

The belt package 40 overall or at least one or all of said radially outer zigzag belt structures 62, 64, 66 and/or at least one or all of said belt plies 50, 52, 54, are preferably formed from a hybrid or merged cord of nylon and aramid. More preferably, the cord construction is 3000 d/2 aramid and 1680 d/1 nylon.

The tire 10 may further comprise an optional auxiliary belt layer (not shown) located radially outward of the main belt package 40.

The auxiliary belt layer is preferably a zigzag belt layer formed of nylon cords preferably having a 1890d/4 or 1890d/3 cord construction.

The angle of the auxiliary belt layer is preferably in a range of from 0 degrees to 30 degrees such as from 0.5 to 5 degrees or from 3 to 15 degrees with respect to the equatorial plane of the tire 10. The auxiliary belt layer preferably has an axial width less than the belt package 40. The auxiliary belt layer width is preferably in the range of 50% to 110%, more preferably 60% to 95%, of the axially widest layer of the belt package 40.

Preferably, a cushion gum layer 80 is located radially outward of the auxiliary belt layer. The cushion gum layer 80 is located radially between the belt package 40 and a cut protector belt 100. The cushion gum layer 80 is preferably formed from a relatively stiff rubber compound, and preferably has a modulus of elasticity in a range of from 20 to 22 MPa.

A cut protector belt 100 is located radially outward of belt package 40 and of the cushion gum layer 80, and is the radially outermost belt of the tire 10.

The cut protector belt 100 is formed of a monofilament cord which is preferably nylon, preferably nylon MXD6 or nylon 6/6, and could also be a blend of nylon, nylon 6/6 or other organic materials.

Preferably, the cut protector belt 100 is formed from 1 to 4 layers of monofilament cord, wherein the layers are formed so that they do not have cut ends. Thus, the cut protector belt 100 may be formed of one or more zigzag belt structure which has two layers of cord that are interwoven together. The cut protector belt may also be formed of a helically wound belt layer that has no cut ends.

Preferably, the cut protector belt 100 belt comprises at least two zigzag belts forming at least four layers, or up to four helically wound layers such a one or two helically wound layers.

The cut protector belt 100 may further comprise a zigzag belt structure in combination with one or two helically wound layers.

The advantage of using the monofilament cord formed of nylon is that it is triple the strength and less gauge than conventional cord, allowing up to four layers of cord without significant weight penalty. The monofilament cord preferably has a relatively high lateral bending stiffness which makes it difficult for the cord to bend out of the way of a nail or other penetrating foreign object.

The cut protector belt 100 preferably has a width which extends from a first tire shoulder to a second tire shoulder, i.e., preferably across the full width of the tread 36.

In one aspect, the cut protector belt 100 is a zigzag belt, formed by alternating the winding of the monofilament cord from one edge of the belt or drum to the other edge of the belt or drum, as shown in FIGS. 3 and 4. The angle of the monofilament in the zigzag belt may range from 1 degree to 45 degrees, and is more preferably in the range of 3 to 30 degrees, and most preferably in the range of 3 to 11 degrees.

The cut protector belt 100 may optionally include a low angle belt (not shown) formed of the monofilament cord, that may be helically wound to form a near zero degree (such as 0.5 to 5 degree or 0.5 to 2 degree) belt layer. The low angle belt is preferably located radially inward of and adjacent to the cut protector belt 100, and preferably has an axial width to cover at least the middle 1/3 of the tread 36 and/or an axial width in a range of from 40 to 80 percent of the axial total tire width. Preferably, the axial width of the low angle belt is in a range of from 40 to 100 percent or 50 to 90 percent of the cut protector belt 100.

The monofilament cord 120 is not round and/or has a flat cross-sectional profile. Preferably, the monofilament cord 120 is nylon cord.

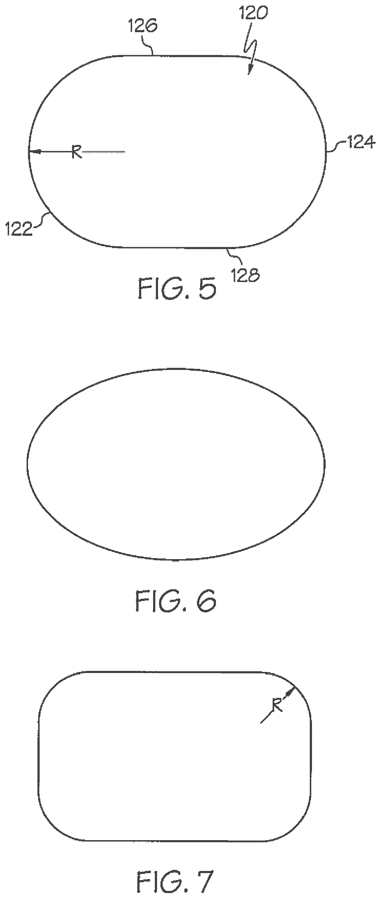

One preferred cross-sectional profile is obround and is shown in FIG. 5. The obround cross-section has two semicircular sides 122, 124 connected by flat upper and lower parallel surfaces 126, 128. The obround monofilament 120 preferably has an axial width in the range of 0.5 mm to 51 mm (0.02 to 2 inches), and more preferably 0.76 mm to 2.54 mm (0.03 to 0.1 inches). The monofilament cord width to height ratio is preferably in the range of 2 to 10, and more preferably in the range of from 2 to 5 or 3 to 5. A monofilament that has an oval cross-sectional shape may be used, as shown in FIG. 6, and preferably has a width greater than its height. A monofilament that has a rectangular cross-sectional shape may be used as shown in FIG. 7, and preferably has a width greater than its height, with preferably radiused corners to avoid sharp edges. The larger width to height ratio increases the lateral bending stiffness and can resist being pushed sideways by the penetrating object. Thus, having a flat monofilament such as obround, or rectangular helps catch the penetrating objects easier than a round cross-sectional shape, which typically allows the penetrating object to slide past it in order to escape penetration. Other cross-sectional shapes of the monofilament may also be used, that preferably are wide with a flat upper and/or lower surface.

In order to improve the adhesion of the rubber to the filaments, it is preferred that the monofilaments 120 are coated with a suitable adhesive such as RFL, and further coated with a rubber coating, such as belt or ply coat.

In one example of the present invention, a nylon 6/6 monofilament cord 120 is used, having a construction of 4400/1 dtex. The cord width or horizontal gauge (axial width) is 1.13 mm, while the vertical gauge is 0.38 mm. The cord LASE is 90 N at 7%, and a cord elongation of greater than 20% at cord breaking load of 300N. The cord is commercially available from Glassmaster and other manufacturers.

In another example of the present invention, a PET polyester monofilament cord is used, having a construction of 1100/9 dtex, with a breaking strength of 650 N, and a gauge of 1.3.

## Claims

1. A tire having a cut protector belt (100) located radially outward of a main belt structure (40),
wherein the cut protector belt (100) is a zigzag belt structure (66) formed by winding a monofilament cord (120) from a first lateral edge to a second lateral edge in a zigzag manner to form an integrally formed dual (two) layer of cords, or wherein the cut protector belt (100) is formed by helically winding a monofilament cord (120) formed of nylon; and
wherein the cross-sectional shape of the monofilament cord (120) is not round and/or has a flat surface; **characterized in that**
the tire further comprises a cushion gum layer (80) between the main belt structure (40) and the cut protector belt (100).

2. The tire of claim 1 wherein the monofilament cord (120) has a cross-sectional shape having a flat radially upper surface.

3. The tire of claim 1 or 2 wherein the monofilament cord (120) has an axial width in the range of from 0.5 mm to 51 mm, preferably in a range of from 0.75 mm to 2.5 mm.

4. The tire of at least one of the previous claims wherein the monofilament cord (120) has an axial width greater than its radial height.

5. The tire of at least one of the previous claims wherein the monofilament cord (120) has a height in the range of 0.12 mm to 5.1 mm, preferably in a range of from 0.2 mm to 2 mm.

6. The tire of at least one of the previous claims wherein the width to height ratio of the monofilament cord (120) is in the range of from 1 to 10, preferably in the range of from 1.1 to 4 or from 1.5 to 3.

7. The tire of at least one of the previous claims wherein the monofilament cord (120) has a cross-sectional shape of obround or wherein the monofilament cord (120) has a cross-sectional shape of rectangular with rounded corners.

8. The tire of at least one of the previous claims wherein the monofilament cord has a cross-sectional shape of oval or elliptical.

9. The tire of at least one of the previous claims wherein the cut protector belt (100) comprises a helically wound belt of monofilament cord (120).

10. The tire of claim 9 wherein the helically wound belt is located radially inward of the zigzag belt structure (66).

11. The tire of at least one of the previous claims wherein the monofilament cord (120) of the zigzag belt structure (66) or of the cut protector belt (100) formed by helically winding the monofilament cord (120) is angled (A) in the range of from 1 to 60 degrees, preferably in the range of from 5 to 11 degrees, with respect to the equatorial plane of the tire (10).

12. The tire of at least one of the previous claims wherein the monofilament cord is a nylon cord, preferably a nylon 6/6 cord.

13. The tire of at least one of the previous claims, wherein the cushion gum rubber layer (80) has a modulus of elasticity in a range of from 20 to 22 MPa.

14. The tire of at least one of the previous claims wherein the cut protector belt (100) includes a helically wound, relatively low angle belt formed of the monofilament cord (120).

15. The tire of at least one of the previous claims wherein the tire (10) is an aircraft tire.

## Patentansprüche

1. Reifen, der einen Schnittschutzgürtel (100) aufweist, der radial nach außen von einer Hauptgürtelstruktur (40) gelegen ist,
wobei der Schnittschutzgürtel (100) eine Zickzack-Gürtelstruktur (66) ist, die durch Wickeln eines Monofilamentkords (120) von einer ersten Seitenkante zu einer zweiten Seitenkante in einer Zickzack-Weise ausgebildet wird, um eine einstückig ausgebildete Dual(zwei)-Schicht von Korden auszubilden, oder wobei der Schnittschutzgürtel (100) durch Spiralwickeln eines Monofilamentkords (120) ausgebildet wird, der aus Nylon ausgebildet ist; und
wobei die Querschnittsform des Monofilamentkords (120) nicht rund ist und/oder eine flache Oberfläche aufweist; **dadurch gekennzeichnet, dass**
der Reifen ferner eine Polstergummierungsschicht (80) zwischen der Hauptgürtelstruktur (40) und dem Schnittschutzgürtel (100) umfasst.

2. Reifen nach Anspruch 1, wobei der Monofilamentkord (120) eine Querschnittsform aufweist, die eine flache radial obere Oberfläche aufweist.

3. Reifen nach Anspruch 1 oder 2, wobei der Monofilamentkord (120) eine axiale Breite in dem Bereich von 0,5 mm bis 51 mm, vorzugsweise in einem Bereich von 0,75 mm bis 2,5 mm aufweist.

4. Reifen nach mindestens einem der vorstehenden Ansprüche, wobei der Monofilamentkord (120) eine axiale Breite, die größer als seine radiale Höhe ist, aufweist.

5. Reifen nach mindestens einem der vorstehenden Ansprüche, wobei der Monofilamentkord (120) eine Höhe in dem Bereich von 0,12 mm bis 5,1 mm, vorzugsweise in einem Bereich von 0,2 mm bis 2 mm aufweist.

6. Reifen nach mindestens einem der vorstehenden Ansprüche, wobei das Verhältnis von Breite zu Höhe des Monofilamentkords (120) in dem Bereich von 1 bis 10, vorzugsweise in dem Bereich von 1,1 bis 4 oder von 1,5 bis 3 liegt.

7. Reifen nach mindestens einem der vorstehenden Ansprüche, wobei der Monofilamentkord (120) eine länglich runde Querschnittsform aufweist oder wobei der Monofilamentkord (120) eine rechteckige Querschnittsform mit abgerundeten Ecken aufweist.

8. Reifen nach mindestens einem der vorstehenden Ansprüche, wobei der Monofilamentkord eine ovale oder elliptische Querschnittsform aufweist.

9. Reifen nach mindestens einem der vorstehenden Ansprüche, wobei der Schnittschutzgürtel (100) einen spiralgewickelten Gürtel aus Monofilamentkord (120) umfasst.

10. Reifen nach Anspruch 9, wobei der spiralgewickelte Gürtel radial nach innen von der Zickzack-Gürtelstruktur (66) gelegen ist.

11. Reifen nach mindestens einem der vorstehenden Ansprüche, wobei der Monofilamentkord (120) der Zickzack-Gürtelstruktur (66) oder des Schnittschutzgürtels (100), der durch Spiralwickeln des Monofilamentkords (120) ausgebildet wird, in dem Bereich von 1 bis 60 Grad, vorzugsweise in dem Bereich von 5 bis 11 Grad hinsichtlich der Äquatorialebene des Reifens (10) gewinkelt (A) ist.

12. Reifen nach mindestens einem der vorstehenden Ansprüche, wobei der Monofilamentkord ein Nylonkord, vorzugsweise ein Nylon 6/6-Kord ist.

13. Reifen nach mindestens einem der vorstehenden Ansprüche, wobei die Polstergummierungskautschukschicht (80) einen Elastizitätsmodul in einem Bereich von 20 bis 22 MPa aufweist.

14. Reifen nach mindestens einem der vorstehenden Ansprüche, wobei der Schnittschutzgürtel (100) einen spiralgewickelten Gürtel mit relativ geringem Winkel einschließt, der aus dem Monofilamentkord (120) ausgebildet ist.

15. Reifen nach mindestens einem der vorstehenden Ansprüche, wobei der Reifen (10) ein Luftfahrzeugreifen ist.

## Revendications

1. Bandage pneumatique qui possède une ceinture de protection contre les coupures (100), qui est disposée à l'extérieur, dans la direction radiale, d'une structure de ceinture principale (40) ;
dans lequel la ceinture de protection contre les coupures (100) est une structure de ceinture en zigzag (66) que l'on obtient par l'intermédiaire de l'enroulement d'un câblé (120) du type à monofilament à partir d'un premier bord latéral jusqu'à un second bord latéral en zigzag afin d'obtenir une double couche (deux couches) de câblés réalisée en une seule pièce ; ou dans lequel on obtient la structure de protection contre les coupures (100) par l'intermédiaire de l'enroulement de manière hélicoïdale d'un câblé (120) du type à monofilament qui est réalisé en nylon ; et
dans lequel la configuration en section transversale du câblé (120) du type à monofilament n'est pas ronde et/ou possède une surface plate ;
**caractérisé en ce que** le bandage pneumatique comprend en outre une couche de caoutchouc gomme (80) faisant office de rembourrage entre la structure de ceinture principale (40) et la ceinture de protection contre les coupures (100).

2. Bandage pneumatique selon la revendication 1, dans lequel le câblé (120) du type à monofilament présente une configuration en section transversale qui possède une surface supérieure plate dans la direction radiale.

3. Bandage pneumatique selon la revendication 1 ou 2, dans lequel le câblé (120) du type à monofilament possède une largeur axiale qui se situe dans la plage allant de 0,5 mm à 51 mm, de préférence dans une plage allant de 0,75 mm à 2,5 mm.

4. Bandage pneumatique selon au moins une des revendications précédentes, dans lequel le câblé (120) du type à monofilament possède une largeur axiale qui est supérieure à sa hauteur radiale.

5. Bandage pneumatique selon au moins une des revendications précédentes, dans lequel le câblé (120) du type à monofilament possède une hauteur qui se situe dans la plage allant de 0,12 mm à 5,1 mm, de préférence dans une plage allant de 0,2 mm à 2 mm.

6. Bandage pneumatique selon au moins une des revendications précédentes, dans lequel le rapport de la largeur à la hauteur du câblé (120) du type à monofilament se situe dans la plage allant de 1 à 10, de préférence dans la plage allant de 1,1 à 4 ou de 1,5 à 3.

7. Bandage pneumatique selon au moins une des revendications précédentes, dans lequel le câblé (120) du type à monofilament possède une configuration en section transversale de forme oblongue ou dans lequel le câblé (120) du type à monofilament possède une configuration en section transversale de forme rectangulaire avec des coins arrondis.

8. Bandage pneumatique selon au moins une des revendications précédentes, dans lequel le câblé du type à monofilament possède une configuration en section transversale de forme ovale ou de forme elliptique.

9. Bandage pneumatique selon au moins une des revendications précédentes, dans lequel la ceinture de protection contre les coupures (100) comprend une ceinture de câblés (120) du type à monofilament, enroulée de manière hélicoïdale.

10. Bandage pneumatique selon la revendication 9, dans lequel la ceinture enroulée de manière hélicoïdale est située à l'intérieur, dans la direction radiale, de la structure de ceinture en zigzag (66).

11. Bandage pneumatique selon au moins une des revendications précédentes, dans lequel le câblé (120) du type à monofilament de la structure de ceinture en zigzag (66) ou de la ceinture de protection contre les coupures (100) que l'on obtient par l'intermédiaire d'un enroulement de manière hélicoïdale forme un angle (A) qui se situe dans la plage allant de 1 à 60 degrés, de préférence dans la plage allant de 5 à 11 degrés, par rapport au plan équatorial du bandage pneumatique (10).

12. Bandage pneumatique selon au moins une des revendications précédentes, dans lequel le câblé du type à monofilament est un câblé en nylon, de préférence un câblé en nylon 6/6.

13. Bandage pneumatique selon au moins une des revendications précédentes, dans lequel la couche de caoutchouc gomme (80) faisant office de rembourrage possède un module d'élasticité qui se situe dans une plage allant de 20 à 22 MPa.

14. Bandage pneumatique selon au moins une des revendications précédentes, dans lequel la ceinture de protection contre les coupures (100) englobe une ceinture enroulée de manière hélicoïdale, qui présente un angle relativement petit, que l'on obtient à partir du câblé (120) du type à monofilament.

15. Bandage pneumatique selon au moins une des revendications précédentes, dans lequel le bandage pneumatique (10) est un bandage pneumatique qui est destiné à un aéroplane.
